# EUROPEAN PATENT SPECIFICATION

(11) **EP 4 212 580 B1**
(45) Date of publication and mention of the grant of the patent: **18.06.2025**
(21) Application number: 22181495.7
(22) Date of filing: 28.06.2022
(51) Int. Cl.: C08J 5/18, C08K 5/01, C08L 29/04, B32B 27/32

(54) **ETHYLENE-VINYL ALCOHOL COPOLYMER COMPOSITION, AND MONOLAYER FILM AND MULTILAYER STRUCTURE CONTAINING THE SAME**
ETHYLEN-VINYLALKOHOL-COPOLYMERZUSAMMENSETZUNG, EINSCHICHTIGE FOLIE UND MEHRSCHICHTIGE STRUKTUR DAMIT
COMPOSITION DE COPOLYMÈRE ÉTHYLÈNE-ALCOOL VINYLIQUE, FILM MONOCOUCHE ET STRUCTURE MULTICOUCHE LA CONTENANT

(30) Priority: 04.01.2022 TW 111100271
(43) Date of publication of application: 19.07.2023
(73) Proprietor: Chang Chun Petrochemical Co., Ltd., Taipei City 104 (TW)
(72) Inventor: SU, Shih Yuan, Taipei City 104 (TW); WU, Hou Hsi, Taipei City 104 (TW)
(74) Representative: 2K Patentanwälte Blasberg Kewitz & Reichel

(56) References cited:
- EP-A1- 3 845 598

## Description

### BACKGROUND OF THE INVENTION

### 1. Technical Field

The present invention relates mainly to but is not limited to an ethylene-vinyl alcohol copolymer (EVOH) composition. More particularly, the invention relates to an EVOH composition, and a monolayer film and a multilayer structure containing the same.

### 2. Description of Related Art

EVOH compositions feature transparency, gas barrier properties, solvent/oil resistance, and high mechanical strength and have been widely used in laminates designed for the preservation of perishables. For example, EVOH compositions and laminates containing the same are in common use in the food packaging industry, the medical equipment and supply industry, the pharmaceutical industry, the electronics industry, and the agricultural chemical industry. More specifically, an EVOH composition is typically added into a laminate to form a distinct layer that functions as an oxygen barrier.

EP 3 845 598 A1 relates to a fluorine-containing ethylene-vinyl alcohol copolymer (EVOH) resin composition as well as mixture and blend thereof. The fluorine-containing EVOH resin composition comprises EVOH and fluorine-containing particles, wherein the fluorine-containing EVOH resin composition has a total fluoride ion content ranging from 45 to 41000 ppm. The invention can reduce the adhesion of EVOH to the inside of the extruder, and effectively reduce the appearance of gel or gelled substance in subsequent finished products.

The manufacturing process of an EVOH generally entails a high-temperature condition. However, as the molecules of an EVOH include many active reactive groups, a high-temperature processing condition tends to change the stability of the materials. More specifically, a high temperature may result in carbon deposition on the die head used in the manufacturing process, gelation of product samples, or even deterioration of the finished product. Heat resistance, therefore, is a critical aspect in EVOH preparation.

To address this issue, it is common practice nowadays to add various heat stabilizers or processing aids, e.g., a specific amount of antioxidant, to the EVOH materials.

### BRIEF SUMMARY OF THE INVENTION

This part of the specification aims to provide a brief summary of the invention so as to enable a basic understanding of the invention. The brief summary of the invention is neither a complete description of the invention nor intended to point out the important or key elements of certain embodiments of the invention or define the scope of the invention.

The inventor of the present invention has found that, while the conventional approach of adding a particular antioxidant to the materials of an EVOH can effectively increase the heat resistance of the materials during the preparation process, a large number of gel particles (also known as "fish eyes") will be generated in the EVOH materials and thus compromise the processing result. To solve this problem, the inventor conducted further experiments and found that adding a particular antioxidant and a fluorine-containing compound at the same time can, thanks to the fluorine-containing compound, prevent the materials of an EVOH from sticking to high-temperature metal and enhance mixing between the EVOH and the antioxidant, thereby addressing the aforesaid issue of the generation of a large number of gel particles due to the addition of an antioxidant to EVOH materials.

More specifically, one aspect of the present invention provides an ethylene-vinyl alcohol copolymer (EVOH) composition, comprising an EVOH, an antioxidant, and a fluorine-containing compound, wherein the weight ratio of the antioxidant content of the EVOH composition to the fluorine content of the EVOH composition ranges from 0.5 to 65, wherein the antioxidant content and the fluorine content are determined by the the method as set out in the description.

In one embodiment of the present invention, the antioxidant content ranges from 250 ppm to 3200 ppm.

In one embodiment of the present invention, the antioxidant is selected from the group consisting of a hindered-phenol-based antioxidant, a hindered-amine-based antioxidant, a phosphorous-ester-based antioxidant, a thioester-based antioxidant, a benzotriazole-based antioxidant, and a benzophenone-based antioxidant.

In one embodiment of the present invention, the EVOH composition has a fluorine content ranging from 40 ppm to 700 ppm.

In one embodiment of the present invention, the fluorine-containing compound is derived from a compound of any one, or a combination thereof, selected from the group consisting of vinylidene fluoride (VDF), hexafluoropropylene (HFP), and tetrafluoroethylene (TFE).

In one embodiment of the present invention, the EVOH composition has a boron content ranging from 10 ppm to 450 ppm.

In one embodiment of the present invention, the EVOH composition has an alkali metal content ranging from 10 ppm to 450 ppm.

In one embodiment of the present invention, the fluorine-containing compound is in a form of particles, and the particles are not larger than 20 µm in size, wherein the particle size refers to either the diameter or the major-axis length of a cross section, and the major axis is defined as the axis of the greatest length.

Another aspect of the present invention provides a monolayer film containing the EVOH composition as described above, and there are less than 200 gel particles of particle sizes not greater than 100 µm per square meter of the monolayer film, wherein the number of gel particles is analyzed by the method as set out in the description .

In one embodiment of the present invention, the EVOH composition contained in the monolayer film has an ethylene content ranging from 20 mole% to 35 mole% and has a heat resistance time equal to or longer than 110 hours at 150°C, wherein the heat resistance time is determined by the method as set out in the description .

In one embodiment of the present invention, the EVOH composition contained in the monolayer film has an ethylene content ranging from 36 mole% to 50 mole% and has a heat resistance time equal to or longer than 80 hours at 150°C, wherein the heat resistance time is determined by the method as set out in the description .

Another aspect of the present invention provides a multilayer structure comprising at least one layer formed of the EVOH composition as described above; the multi-layer structure further comprises at least one polymer layer and at least one adhesive layer.

In one embodiment of the present invention, the polymer layer is selected from the group consisting of a polyethylene layer, a polyethylene-grafted maleic anhydride layer, a polypropylene layer, a nylon layer, and a combination thereof.

The present invention is advantageous in that by adding an antioxidant in conjunction with a fluorine-containing polymer, and by controlling the ratio of the antioxidant content to the fluorine content within a particular range, the EVOH composition of the invention not only is provided with high resistance to heat, but also is kept from generating a large number of gel particles during the preparation process.

### BRIEF DESCRIPTION OF THE SEVERAL VIEWS OF THE DRAWINGS

None.

### DETAILED DESCRIPTION OF THE INVENTION

The present invention relates to an ethylene-vinyl alcohol copolymer (EVOH) composition. The EVOH composition contains both an antioxidant and a fluorine-containing compound, and the ratio of the antioxidant content of the EVOH composition to the fluorine content of the EVOH composition is within a particular range. The EVOH composition can be used to prepare a monolayer film or a multilayer structure.

In one aspect of the present invention, an EVOH composition that includes an EVOH, an antioxidant, and a fluorine-containing compound is provided. The ratio of the antioxidant content of the EVOH composition to the fluorine content of the EVOH composition is in the range from 0.5 to 65, e.g., 0.52, 0.53, 4.25, 4.80, 4.87, 5.13, 5.50, 7.58, 8.57, 8.64, 9.86, 10.21, 10.47, 10.67, 27.23, 50.28 or 63.50.

As used herein, the term "antioxidant" refers to a compound for capturing the free radicals generated by deterioration of an EVOH. In at least one embodiment of the present invention, the antioxidant is selected from the group consisting of a hindered-phenol-based antioxidant, a hindered-amine-based antioxidant, a phosphorous-ester-based antioxidant, a thioester-based antioxidant, a benzotriazole-based antioxidant, and a benzophenone-based antioxidant. In one preferred embodiment, the antioxidant content of the EVOH composition ranges from 250 ppm to 3200 ppm, may be, for example, 250 ppm, 500 ppm, 750 ppm, 1000 ppm, 1250 ppm, 1500 ppm, 1750 ppm, 2000 ppm, 2250 ppm, 2500 ppm, 2750 ppm, 3000 ppm or 3200 ppm, or may be any value therebetween. The EVOH composition of the invention includes the antioxidant in order to capture the free radicals generated from the EVOH while the EVOH is being heated, thereby reducing deterioration of the EVOH.

Herein, the fluorine-containing compound is also referred to as the fluoropolymer. In at least one embodiment of the present invention, the fluorine-containing compound includes or is selected from the group consisting of polyvinylidene fluoride (PVDF), polytetrafluoroethylene, polyhexafluoropropylene, polychlorotrifluoroethylene(PCTFE),2-chloropentafluoropropene,dichlorodifluoroethylen e, 1,1-dichlorofluoroethylene and combinations thereof. Furthermore/alternatively, the fluorine-containing compound is a copolymer derived from at least two selected from the group consisting of vinylidene fluoride (VDF), hexafluoropropylene (HFP), and tetrafluoroethylene (TFE). In some embodiments, the fluoropolymer may be a copolymer derived from two or more selected from the group consisting of VDF, HFP, and TFE. For example, the fluoropolymer may be a copolymer derived from VDF and HFP, a copolymer derived from TFE and HFP, a copolymer derived from VDF and TFE, or a copolymer derived from VDF, HFP, and TFE.

The fluorine content of the EVOH composition ranges from 40 ppm to 700 ppm. In some embodiments of the present invention, the fluorine content may range from 40 ppm to 100 ppm, from 101 ppm to 200 ppm, from 201 ppm to 300 ppm, from 301 ppm to 400 ppm, from 401 ppm to 500 ppm, from 501 ppm to 600 ppm, or from 601 ppm to 700 ppm. In at least one embodiment of the invention, the fluorine-containing compound is in the form of particles. Preferably, the particles are microparticles, which are defined as having a size ranging from 10⁻⁷ m to 10⁻⁴ m by the International Union of Pure and Applied Chemistry (IUPAC). In this invention, the term "particle size" refers to either the diameter or the major-axis length of a cross section. The particle size of the fluorine-containing compound can be controlled by controlling the type or category of the fluoropolymer, the amount of the fluoropolymer, and the ethylene content of the EVOH composition. If the particles of the fluorine-containing compound are spherical, it is the diameters of the cross sections of the particles that are used to determine whether the fluorine-containing compound particles have the desired particle size. If the particles of the fluorine-containing compound are not spherical and/or if the cross sections of the fluorine-containing compound particles are non-circular (e.g., elliptical), it is the major-axis lengths of the cross sections of the fluorine-containing compound particles that are used to determine whether the fluorine-containing compound particles have the desired particle size, wherein the "major axis" is defined as the axis of the greatest length. In some embodiments, the cross sections of all the fluorine-containing compound particles in the EVOH resin composition are of sizes less than or equal to 20 µm, e.g., less than or equal to 19 µm, less than or equal to 18 µm, less than or equal to 16 µm, less than or equal to 14 µm or less than or equal to 12 µm. An appropriate amount of fluorine-containing compound particles can reduce not only carbon deposition on the die head while the EVOH composition of the invention is being heated, but also the generation of gel particles while the EVOH composition is being extruded, thus contributing to a smoother manufacturing process and higher product quality.

Conventionally, an antioxidant is added to an EVOH to increase the heat resistance of the EVOH, but the inventor of the present invention has found that the addition of more antioxidant for higher resistance to heat will result in flocculation and hence the generation of gel particles. In the present invention, the aforesaid fluorine-containing compound is added to allow the EVOH composition to be heated stably during the processing process so that the antioxidant can bring about significant resistance to heat while gelation is reduced. In other words, the presence of the fluorine-containing compound in the invention helps enhance the performance of the antioxidant, and coexistence of the fluorine-containing compound and the antioxidant helps improve the processing result of the EVOH composition.

Moreover, the inventor of the present invention has found that when the EVOH composition includes the EVOH, the antioxidant, and the fluorine-containing compound at the same time, the fluorine-containing compound can prevent the EVOH composition from sticking to the high-temperature metal of the machine being used to process the composition, thereby producing a physical-property-related external effect. Furthermore, the fluorine-containing compound allows the EVOH to mix better with the antioxidant and can therefore enhance the performance of the antioxidant and thereby produce a chemical-property-related internal effect. With the internal and external effects produced, the EVOH composition of the invention is superior to those added only with an antioxidant.

In some embodiments of the present invention, the EVOH composition further includes a boron compound and has a boron content ranging from 10 ppm to 450 ppm. More specifically, the boron content of the EVOH composition by weight may range from 10 ppm to 450 ppm, 10 ppm to 400 ppm, 10 ppm to 350 ppm, 10 ppm to 300 ppm, 10 ppm to 275 ppm, 10 ppm to 250 ppm, 10 ppm to 225 ppm, 10 ppm to 200 ppm, 10 ppm to 175 ppm, 20 ppm to 450 ppm, 20 ppm to 400 ppm, 20 ppm to 350 ppm, 20 ppm to 300 ppm, 20 ppm to 275 ppm, 20 ppm to 250 ppm, 20 ppm to 225 ppm, 20 ppm to 200 ppm, 20 ppm to 175 ppm, 60 ppm to 450 ppm, 60 ppm to 400 ppm, 60 ppm to 350 ppm, 60 ppm to 300 ppm, 60 ppm to 275 ppm, 60 ppm to 250 ppm, 60 ppm to 225 ppm, 60 ppm to 200 ppm, 60 ppm to 175 ppm, 100 ppm to 450 ppm, 100 ppm to 400 ppm, 100 ppm to 350 ppm, 100 ppm to 300 ppm, 100 ppm to 275 ppm, 100 ppm to 250 ppm, 100 ppm to 225 ppm, 100 ppm to 200 ppm, 100 ppm to 175 ppm, 140 ppm to 450 ppm, 140 ppm to 400 ppm, 140 ppm to 350 ppm, 140 ppm to 300 ppm, 140 ppm to 275 ppm, 140 ppm to 250 ppm, 140 ppm to 225 ppm, 140 ppm to 200 ppm, 180 ppm to 450 ppm, 180 ppm to 400 ppm, 180 ppm to 350 ppm, 180 ppm to 300 ppm, 180 ppm to 275 ppm, 180 ppm to 250 ppm, 180 ppm to 225 ppm, 220 ppm to 450 ppm, 220 ppm to 400 ppm, 220 ppm to 350 ppm, 220 ppm to 300 ppm or from 220 ppm to 275 ppm. By controlling the boron content of the EVOH composition within a particular range, the viscosity of the EVOH composition can be increased to reduce the chance of the EVOH composition adhering to an extruder screw, thereby providing the materials of the EVOH composition with a self-cleaning effect. The particular range of boron content also contributes to higher uniformity of the thickness of a film made of the composition.

In some cases, the boron compound may include boric acid or its metal salts. Some examples of such metal salts include calcium borates, cobalt borates, zinc borates (e.g. zinc tetraborate and zinc metaborate), potassium aluminum borates, ammonium borates (e.g., ammonium metaborate, ammonium tetraborate, ammonium pentaborate, and ammonium octaborate), cadmium borates (e.g., cadmium orthoborate and cadmium tetraborate), potassium borates (e.g., potassium metaborate, potassium tetraborate, potassium pentaborate, potassium hexaborate, and potassium octaborate), silver borates (e.g., silver metaborate and silver tetraborate), copper borates (e.g., copper(II) borate, copper(II) metaborate, and copper(II) tetraborate), sodium borates (e.g., sodium metaborate, sodium diborate, sodium tetraborate, sodium pentaborate, sodium hexaborate, and sodium octaborate), lead borates (e.g., lead metaborate and lead hexaborate), nickel borates (e.g., nickel orthoborate, nickel diborate, nickel pentaborate, and nickel octaborate), barium borates (e.g., barium orthoborate, barium metaborate, barium diborate, and barium tetraborate), bismuth borates, magnesium borates (e.g., magnesium orthoborate, magnesium diborate, magnesium metaborate, trimagnesium tetraborate, and pentamagnesium tetraborate), manganese borates (e.g., manganese(I) borate, manganese metaborate, and manganese tetraborate), lithium borates (e.g., lithium metaborate, lithium tetraborate, and lithium pentaborate), metal salts of any of the above, and combinations of at least two of the above. The boron compound may also include borate minerals such as borax, kainite, inyoite, kotoite, suanite, and szaibelyite. Preferably, the boron compound is borax, boric acid, or a sodium borate (e.g., sodium metaborate, sodium diborate, sodium tetraborate, sodium pentaborate, sodium hexaborate, or sodium octaborate).

In some cases, the EVOH composition may include, in addition to the boron compound at 10 ppm to 450 ppm, cinnamic acid, an alkali metal, a conjugated polyene, a lubricating agent, an alkaline earth metal, a salt of any of the above, and/or a mixture of at least two of the above, in order for the aforesaid substance(s) to provide the EVOH composition with better properties. In some embodiments of the present invention, the inclusion of a compound having the conjugated polyene structure in the EVOH composition at 1 ppm to 30000 ppm by weight helps inhibit coloring after the EVOH composition is heated, thus enhancing thermal stability of the EVOH composition. If the EVOH composition includes an alkali metal compound or alkaline earth metal compound and the corresponding metal content is 1 ppm to 1000 ppm by weight, preferably 10 ppm to 450 ppm by weight, the EVOH composition will have better forming properties during an extended forming operation. If the EVOH composition includes a lubricating agent at 1 ppm to 300 ppm by weight, the EVOH composition will have better processing properties. In at least one embodiment of the invention, the EVOH composition has an alkali metal content ranging from 10 ppm to 450 ppm, wherein the alkali metal content may be, for example, 10 ppm, 50 ppm, 100 ppm, 150ppm, 200 ppm. 250 ppm, 300 ppm, 350 ppm, 400 ppm or 450 ppm or may be any value therebetween.

In another aspect of the present invention, a monolayer film containing the foregoing EVOH composition is provided, and there are less than 200 gel particles of particle sizes not greater than 100 µm per square meter of the monolayer film. More specifically, the number of gel particles is analyzed with a charge-coupled device (CCD) sensor and Film Surface Analyzer (FSA)-100 operating on FSA-100 V.8 software.

In at least one embodiment of the present invention, the thickness of the monolayer film ranges from 50 µm to 150 µm and is preferably 100 µm. In another aspect, the EVOH composition contained in the monolayer film has an ethylene content. For example, the ethylene content may range from 20 mole% to 50 mole%, from 25 mole% to 45 mole%, from 28 mole% to 42 mole%, or from 30 mole% to 40 mole%. In fact, the EVOH composition may include two or more EVOHs whose ethylene contents are different. For example, one of the EVOHs may have an ethylene content ranging from 20 mole% to 35 mole%, such as from 24 mole% to 35 mole%, or 28 to 35 mole%, or 20 to 32 mole%, or 24 to 32 mole%, or 28 to 32 mole%, or 20 to 30 mole% or from 24 mole% to 30 mole%, with the EVOH composition having a heat resistance time equal to or longer than 110 hours at 150°C. Furthermore/alternatively, in some embodiments of the invention, the ethylene content of the EVOH, or one of the EVOHs, of the EVOH composition may range from 36 mole% to 50 mole%, such as from 40 mole% to 50 mole%, or 44 mole% to 50 mole%, or 36 mole% to or 45 mole% or from 40 mole% to 45 mole%, with the EVOH composition having a heat resistance time equal to or longer than 80 hours at 150°C.

The present invention further provides a multilayer structure that includes at least one layer formed of the EVOH composition of the invention, at least one polymer layer, and at least one adhesive layer. The polymer layer may be selected from the group consisting of a polyethylene layer, a polyethylene-grafted maleic anhydride layer, a polypropylene layer, a nylon layer, and a combination of the above. The adhesive layer may be a tie layer, such as ARKEMA OREVAC 18729 made by ARKEMA S.A.

### Embodiments

The following non-limiting embodiments of the various aspects of the present invention are provided mainly to demonstrate those aspects of the invention and their intended effects.

### Preparation of EVOH

In at least one embodiment of the present invention, an EVOH is prepared by saponification of an ethylene-vinyl acetate copolymer (EVAC) with an ethylene content of 29 mole% or 44 mole% to a degree of saponification of 99.5%. The resulting EVOH is dissolved in a solution containing methanol and water (in a ratio of 70:30) such that EVOH solids make up 41 wt% of the solution. The solution is then kept at 60°C.

Following that, underwater pelletization is performed on the methanol-water-EVOH solution to create pellets. More specifically, the methanol-water-EVOH solution is pumped into a feed tube at a flow velocity of 120 L/min, then delivered into an input tube of a diameter of 2.8 mm, and then cut with a rotary cutter rotating at 1500 rpm. The resulting EVOH pellets are cooled by being added with 5°C water. After that, the EVOH pellets are centrifuged in order to separate EVOH particles from the pellets. The separated EVOH particles are washed with water and then dried for later use.

### Preparation of fluorine-containing compound A

An autoclave is used as the batch reactor for preparing a fluorine-containing compound A. The autoclave has an internal volume of e.g. 20 L and is equipped with an electromagnetic-induction-based agitator. The autoclave is sufficiently filled with nitrogen (N₂), before being filled with reduced-pressure nitrogen five times.

While the pressure in the autoclave is being reduced, 6,960 g of deoxygenated water, 3,204 g of 1,1,2-trichloro-1,2,2-trifluoroethane, and 3.5 g of methylcellulose are put into the autoclave. The methylcellulose has a viscosity of 50 cp and is stirred into the composition in the autoclave at 450 rpm to serve as a suspension stabilizer. The composition in the autoclave is then placed in a 52°C environment.

A monomer consisting of 25.3 wt% vinylidene fluoride (VDF), 68.6 wt% hexafluoropropylene (HFP), and 6.1 wt% tetrafluoroethylene (TFE) is mixed into the batch as a filler gas and is supplied until the pressure reaches 10 kg/cm². After that, 45.6 g of a solution containing e.g. 90 wt% 1,1,2-trichloro-1,2,2-trifluoroethane and 10 wt% diisopropyl peroxydicarbonate is added as a catalyst for the polymerization reaction, with the diisopropyl peroxydicarbonate functioning as an initiator for the polymerization reaction. As a reduction in pressure takes place during the polymerization reaction, a mixed monomer containing 44.7 wt% VDF, 32.5 wt% HFP, and 22.8 wt% TFE is further added to raise the lowered pressure back to 10 kg/cm². Once the polymerization reaction is completed, the residual mixed monomer is removed, and the resulting suspension is dewatered in a centrifuge, washed with deionized water, and then vacuum-dried at 100°C to produce e.g. 7.5 kg of the fluorine-containing compound A in this embodiment.

### Preparation of fluorine-containing compound B

The fluorine-containing compound B in this embodiment is prepared with a similar autoclave and in the same way as described above for preparing the fluorine-containing compound A. The autoclave is also filled with reduced-pressure nitrogen repeatedly, or five times to be exact.

While the pressure in the autoclave is being reduced, 7,200 g of deoxygenated water, 3,250 g of 1,1,2-trichloro-1,2,2-trifluoroethane, and 4 g of methylcellulose are put into the autoclave. The methylcellulose has a viscosity of 50 cp and is stirred into the batch in the autoclave at 500 rpm to serve as a suspension stabilizer. The batch in the autoclave is then placed in a 52°C environment.

A monomer consisting of 25 wt% VDF, 55 wt% HFP, and 20 wt% TFE is used as a filler gas and is supplied until the pressure reaches 20 kg/cm². After that, 40 g of a solution containing e.g. 85 wt% 1,1,2-trichloro-1,2,2-trifluoroethane and 15 wt% diisopropyl peroxydicarbonate is added as a catalyst for the polymerization reaction, with the diisopropyl peroxydicarbonate functioning as an initiator for the polymerization reaction. As a reduction in pressure takes place during the polymerization reaction, a mixed monomer containing 40 wt% VDF, 35 wt% HFP, and 25 wt% TFE is further added to raise the lowered pressure back to 20 kg/cm². Once the polymerization reaction is completed, the residual mixed monomer is removed, and the resulting suspension is dewatered in a centrifuge, washed with deionized water, and then vacuum-dried at 100°C to produce e.g. 6 kg of the fluorine-containing compound B in this embodiment.

### Preparation of EVOH composition

The EVOH composition of the present invention is prepared from the foregoing essential ingredients, namely an EVOH, a fluorine-containing compound, and an antioxidant, and may be mixed with any of the aforesaid additional ingredients as appropriate. The manufacturing method may be any well-known method such as the dry blending method, the fusion-based mixing method, the solution mixing method, the impregnation method, or a combination of the above.

In some embodiments of the present invention, the EVOH particles, the antioxidant, and the fluorine-containing compound are directly dry-blended in a dry blender or are subjected to fusion-based mixing in order to produce EVOH composition particles.

In other embodiments of the present invention, the EVOH particles are mixed separately with the fluorine-containing compound and the antioxidant to form two masterbatches, which are then dry-blended to produce EVOH composition particles.

### Preparation of monolayer film

In some embodiments of the present invention, the EVOH composition particles obtained as described above are fed into a monolayer T-die cast film extruder (optically controlled system MEV4) in order to prepare a monolayer film. More specifically, the temperature of the extruder is set at 220°C, the temperature of the die (i.e., the T-die) is set at 230°C, and the rotation speed of the screw is 7 rpm (rotations/minute).

### Analysis and evaluation methods

### Analysis of antioxidant content

In some embodiments of the present invention, the analysis method is as follows: To begin with, 200 g of the finished-product particles are evenly pulverized. 5 g of the resulting powder is then taken as a sample, and an extraction process is performed on the sample with 10 ml of an organic solvent (i.e., a solvent capable of dissolving the antioxidant, such as toluene, dichlorotoluene, or acetone). The extract obtained is diluted and then analyzed by liquid chromatography quadrupole time-of-flight (LC-Q-TOF) mass spectrometry. To quantify the antioxidant content, the absolute standard curve method is used, with the standard curved derived from a standard solution of the antioxidant.

### Analysis of total fluorine content

Here, the total fluorine content is analyzed by ion chromatography (IC). The instrument used is Metrohm 930 Compact IC Flex/Ses/PP/Deg. The detection method is NIEA W415.54B (Method for Detecting Anions in Water). The pretreatment includes burning a 20-g sample with an oxygen bomb and then extracting the antioxidant with water in order to analyze the antioxidant content. Samples are taken randomly, and the analysis results of each 10 samples are averaged.

### Analysis and evaluation of gel particles

Once an EVOH composition is made into a film, the gel particles in the film are detected and analyzed with a charge-coupled device (CCD) sensor and Film Surface Analyzer (FSA)-100 operating on FSA-100 V.8 software. More specifically, if less than 200 gel particles of particle sizes not greater than 100 µm are found per square meter of the film, the analysis result is indicated by "O"; if more than 200 gel particles of particle sizes not greater than 100 µm are found per square meter of the film, the analysis result is indicated by "X".

### Analysis and evaluation of heat resistance

After an EVOH composition is made into a 100-µm-thick film, an aging test is conducted in accordance with DIN EN ISO 2578: 1998-10 at the standard test temperature of 150°C, with the tensile strength tested by ASTM D882. More specifically, for EVOHs whose ethylene contents are 20-35 mole%, the analysis result is indicated by "O" if the heat resistance time is longer than 110 hours and "X" if otherwise; for EVOHs whose ethylene contents are 36-50 mole%, the analysis result is indicated by "O" if the heat resistance time is longer than 80 hours and "X" if otherwise.

### Embodiments 1 to 17

The preparation method described above or a similar preparation method was used to make the EVOH compositions in embodiments 1 to 17. The variables or preparation parameters used in those embodiments are detailed in Table 1-1 and Table 1-2.

**Table 1-1**

| | EV spec. | Step 1 | | | | | Step 2 | | | |
|---|---|---|---|---|---|---|---|---|---|---|
| | | EVOH | Antioxidant | Antioxidant | Fluorine-containing compound | Product | EVOH | MB-A | MB-B | Product |
| | | | Fluorine-containing compound | | | | | | | |
| Embodiment 1 | EV44 | 99.96 | IRGANOX 1010 | 0.03 | 0.01 | Product obtained by mixing | - | - | - | - |
| | | | A | | | | | | | |
| Embodiment 2 | EV44 | 97 | IRGANOX 1010 | 3 | 0 | MB-A | 95.7 | 1 | 3.3 | Product obtained by dry blending |
| | | 97 | A | 0 | 3 | MB-B | | | | |
| Embodiment 3 | EV44 | 97 | IRGANOX 1010 | 3 | 0 | MB-A | 89.7 | 10 | 0.3 | Product obtained by dry blending |
| | | 97 | A | 0 | 3 | MB-B | | | | |
| Embodiment 4 | EV44 | 97 | IRGANOX 1010 | 3 | 0 | MB-A | 94.7 | 5 | 0.3 | Product obtained by dry blending |
| | | 97 | A | 0 | 3 | MB-B | | | | |
| Embodiment 5 | EV44 | 97 | IRGANOX 1010 | 3 | 0 | MB-A | 87 | 10 | 3 | Product obtained by dry blending |
| | | 97 | A | 0 | 3 | MB-B | | | | |
| Embodiment 6 | EV29 | 99 | IRGANOX 1010 | 1 | 0 | MB-A | 96 | 3 | 1 | Product obtained by dry blending |
| | | 99 | A | 0 | 1 | MB-B | | | | |
| Embodiment 7 | EV29 | 95 | IRGANOX 1010 | 5 | 0 | MB-A | 97.6 | 0.6 | 1.8 | Product obtained by dry blending |
| | | 95 | A | 0 | 5 | MB-B | | | | |
| Embodiment 8 | EV29 | 97 | IRGANOX 1010 | 3 | 0 | MB-A | 89.7 | 10 | 0.3 | Product obtained by dry blending |
| | | 97 | A | 0 | 3 | MB-B | | | | |
| Embodiment 9 | EV29 | 97 | IRGANOX 1010 | 3 | 0 | MB-A | 87 | 10 | 3 | Product obtained by dry blending |
| | | 97 | A | 0 | 3 | MB-B | | | | |
| Embodiment 10 | EV44 | 99 | IRGANOX 1098 | 1 | 0 | MB-A | 88 | 10 | 2 | Product obtained by dry blending |
| | | 99 | A | 0 | 1 | MB-B | | | | |

**Table 1-2**

| | | Step 1 | | | | | Step 2 | | | |
|---|---|---|---|---|---|---|---|---|---|---|
| | EV spec. | EVOH | Antioxidant | Antioxidant | Fluorine-containing compound | Product | EVOH | MB-A | MB-B | Product |
| | | | Fluorine-containing compound | | | | | | | |
| Embodiment 11 | EV4 4 | 99 | Antioxidant CA | 1 | 0 | MB-A | 88 | 10 | 2 | Product obtained by dry blending |
| | | 99 | A | 0 | 1 | MB-B | | | | |
| Embodiment 12 | EV4 4 | 99 | IRGANOX 168 | 1 | 0 | MB-A | 88 | 10 | 2 | Product obtained by dry blending |
| | | 99 | A | 0 | 1 | MB-B | | | | |
| Embodiment 13 | EV2 9 | 99 | IRGANOX 1098 | 1 | 0 | MB-A | 88 | 10 | 2 | Product obtained by dry blending |
| | | 99 | B | 0 | 1 | MB-B | | | | |
| Embodiment 14 | EV2 9 | 99 | Antioxidant CA | 1 | 0 | MB-A | 88 | 10 | 2 | Product obtained by dry blending |
| | | 99 | B | 0 | 1 | MB-B | | | | |
| Embodiment 15 | EV2 9 | 99 | IRGANOX 168 | 1 | 0 | MB-A | 88 | 10 | 2 | Product obtained by dry blending |
| | | 99 | B | 0 | 1 | MB-B | | | | |
| Embodiment 16 | EV2 9 | 97 | Naugard^{®}445 | 3 | 0 | MB-A | 87 | 10 | 3 | Product obtained by dry blending |
| | | 97 | A | 0 | 3 | MB-B | | | | |
| Embodiment 17 | EV2 9 | 99 | Naugard^{®}412S | 1 | 0 | MB-A | 88 | 10 | 2 | Product obtained by dry blending |
| | | 99 | A | 0 | 1 | MB-B | | | | |

Embodiments 1 to 17 are described in more detail as follows. In embodiment 1, EVOH composition particles were prepared by performing fusion-based mixing directly on the EVOH particles, the antioxidant, and the fluorine-containing compound. More specifically, the preparation method of embodiment 1 included mixing the EVOH particles, the antioxidant, and the fluorine-containing compound in twin-screw extruder Zenix ZPT-32HT (purchased from ZENIX INDUSTRIAL CO LTD), with the length-to-diameter ratio being 20:1 (20 mm/mm), the rotation speed of the twin screws being 100 rpm, and the rotation speed of the hopper being 15 rpm.

The preparation method of embodiments 2 to 17 included step 1, in which a masterbatch MB-A was formed by adding the antioxidant to some EVOH particles, and a masterbatch MB-B by adding the fluorine-containing compound to some more EVOH particles; and step 2, in which EVOH composition particles were prepared by dry-blending the two masterbatches MB-A and MB-B together. More specifically, embodiments 2 to 17 used the same extruder as embodiment 1 to prepare MB-A and MB-B by mixing the EVOH with the antioxidant and the fluorine-containing compound respectively, with the length-to-diameter ratio being 20:1 (20 mm/mm) and the rotation speed of the twin screws being 100 rpm, and the resulting MB-A and MB-B were blended with more EVOH in a dry blender at a rotation speed of 30 rpm for 30 minutes.

It should be pointed out that the content parameters in Table 1-1 and Table 1-2 are based on weight and are in the unit of "percent by weight" (wt%); that EV29 represents an EVOH composition whose ethylene content is 29 mole%, and EV44 represents an EVOH composition whose ethylene content is 44 mole%; that the antioxidants used include hindered-phenol-based antioxidants (product codes: IRGANOX 1010, Antioxidant CA, and IRGANOX 1098), a hindered-amine-based antioxidant (product code: Naugard^{®}445), a phosphorous-ester-based antioxidant (product code: IRGANOX 168), and a thioester-based antioxidant (product code: Naugard^{®}412S); and that the fluorine-containing compounds used include the foregoing fluorine-containing compounds A and B.

### Comparative examples 1 to 15

The preparation method described above or a similar preparation method was used to make the EVOH compositions in comparative examples 1 to 15. The variables or preparation parameters used in those comparative examples are detailed in Table 2-1 and Table 2-2.

**Table 2-1**

| | | Step 1 | | | | | Step 2 | | | |
|---|---|---|---|---|---|---|---|---|---|---|
| | EV spec. | EVOH | Antioxidant | Antioxidant | Fluorine-containing compound | Product | EVOH | MB-A | MB-B | Product |
| | | | Fluorine-containing compound | | | | | | | |
| Comparative example 1 | EV44 | 100 | | 0 | 0 | blank-1 | - | - | - | - |
| Comparative example 2 | EV29 | 100 | | 0 | 0 | blank-2 | - | - | - | - |
| Comparative example 3 | EV44 | 99.97 | IRGANOX 1010 | 0.03 | 0 | Product obtained by mixing | - | - | - | - |
| Comparative example 4 | EV44 | 97 | IRGANOX 1010 | 3 | 0 | MB-A | 89.9 | 10 | 0.1 | Product obtained by dry blending |
| | | 97 | A | 0 | 3 | MB-B | | | | |
| Comparative example 5 | EV29 | 97 | IRGANOX 1010 | 3 | 0 | MB-A | 89.9 | 10 | 0.1 | Product obtained by dry blending |
| | | 97 | A | 0 | 3 | MB-B | | | | |
| Comparative example 6 | EV29 | 97 | IRGANOX 1010 | 3 | 0 | MB-A | 99 | 1 | 0 | Product obtained by dry blending |
| | | 97 | A | 0 | 3 | MB-B | | | | |
| Comparative example 7 | EV29 | 97 | IRGANOX 1010 | 3 | 0 | MB-A | 94 | 1 | 5 | Product obtained by dry blending |
| | | 97 | A | 0 | 3 | MB-B | | | | |

**Table 2-2**

| | | Step 1 | | | | | Step 2 | | | |
|---|---|---|---|---|---|---|---|---|---|---|
| | EV spec. | EVOH | Antioxidant | Antioxidant | Fluorine-containing compound | Product | EVOH | MB-A | MB-B | Product |
| | | | Fluorine-containing compound | | | | | | | |
| Comparative example 8 | EV4 4 | 99 | IRGANOX 1098 | 1 | 0 | MB-A | 79.9 | 0.1 | 20 | Product obtained by dry blending |
| | | 99 | A | 0 | 1 | MB-B | | | | |
| Comparative example 9 | EV4 4 | 99 | Antioxidant CA | 1 | 0 | MB-A | 79.9 | 0.1 | 20 | Product obtained by dry blending |
| | | 99 | A | 0 | 1 | MB-B | | | | |
| Comparative example 10 | EV4 4 | 99 | IRGANOX 168 | 1 | 0 | MB-A | 79.9 | 0.1 | 20 | Product obtained by dry blending |
| | | 99 | A | 0 | 1 | MB-B | | | | |
| Comparative example 11 | EV2 9 | 99 | IRGANOX 1098 | 1 | 0 | MB-A | 79.9 | 0.1 | 20 | Product obtained by dry blending |
| | | 99 | B | 0 | 1 | MB-B | | | | |
| Comparative example 12 | EV2 9 | 99 | Antioxidant CA | 1 | 0 | MB-A | 79.9 | 0.1 | 20 | Product obtained by dry blending |
| | | 99 | B | 0 | 1 | MB-B | | | | |
| Comparative example 13 | EV2 9 | 99 | IRGANOX 168 | 1 | 0 | MB-A | 79.9 | 0.1 | 20 | Product obtained by dry blending |
| | | 99 | B | 0 | 1 | MB-B | | | | |
| Comparative example 14 | EV2 9 | 97 | IRGANOX 1010 | 3 | 0 | MB-A | 94.7 | 5 | 0.3 | Product obtained by dry blending |
| | | 99 | B | 0 | 1 | MB-B | | | | |
| Comparative example 15 | EV2 9 | - | - | - | - | - | 99 | 0 | 1 | Product obtained by dry blending |
| | | 99 | B | 0 | 1 | MB-B | | | | |

Comparative examples 1 to 15 are described in more detail as follows. In comparative examples 1 and 2, no antioxidant or fluorine-containing compound was added. In comparative example 3, the preparation method was similar to that of embodiment 1 and included performing fusion-based mixing directly on the EVOH particles and the antioxidant so as to prepare EVOH composition particles. In comparative examples 4 to 15, the preparation method was similar to that of embodiments 2 to 17 and included step 1, in which two masterbatches MB-A and MB-B were formed by adding the antioxidant and the fluorine-containing compound to the EVOH particles respectively; and step 2, in which EVOH composition particles were prepared by dry-blending the two masterbatches together (except that comparative example 6 used only the masterbatch MB-A, and that comparative example 15 used only the masterbatch MB-B).

It should be pointed out that the content parameters in Table 2-1 and Table 2-2 are based on weight and are in the unit of "percent by weight" (wt%); that EV29 represents an EVOH composition whose ethylene content is 29 mole%, and EV44 represents an EVOH composition whose ethylene content is 44 mole%; that the antioxidants used include hindered-phenol-based antioxidants (product codes: IRGANOX 1010, Antioxidant CA, and IRGANOX 1098) and a phosphorous-ester-based antioxidant (product code: IRGANOX 168); and that the fluorine-containing compounds used include the foregoing fluorine-containing compounds A and B.

### Analysis and evaluation results

The antioxidant contents, total fluorine concentrations, and antioxidant content to total fluorine concentration ratios of embodiments 1 to 17 and of comparative examples 1 to 15 were analyzed. The monolayer films made of the EVOH compositions of embodiments 1 to 17 and of comparative examples 1 to 15 were also analyzed and evaluated in terms of the "generation of gel particles" and "heat resistance". The analysis results are detailed in Table 3-1 and Table 3-2, in which NA indicates the content/concentration in question being 0 or being too low to be detected.

**Table 3-1**

| | Antioxidant (ppm) | Total fluorine concentration (ppm) | Antioxidant /Fluorine | Gel particles | Heat resistance | Heat resistance time (hours) (at 150°C) |
|---|---|---|---|---|---|---|
| Embodiment 1 | 286 | 52 | 5.50 | O | O | 110 |
| Embodiment 2 | 310 | 580 | 0.53 | O | O | 131 |
| Embodiment 3 | 2921 | 46 | 63.50 | O | O | 178 |
| Embodiment 4 | 1525 | 56 | 27.23 | O | O | 143 |
| Embodiment 5 | 3025 | 621 | 4.87 | O | O | 185 |
| Embodiment 6 | 293 | 69 | 4.25 | O | O | 156 |
| Embodiment 7 | 274 | 523 | 0.52 | O | O | 173 |
| Embodiment 8 | 2866 | 57 | 50.28 | O | O | 210 |
| Embodiment 9 | 3088 | 602 | 5.13 | O | O | 228 |
| Embodiment 10 | 986 | 115 | 8.57 | O | O | 148 |
| Embodiment 11 | 1026 | 98 | 10.47 | O | O | 149 |
| Embodiment 12 | 1123 | 110 | 10.21 | O | O | 130 |
| Embodiment 13 | 1014 | 95 | 10.67 | O | O | 183 |
| Embodiment 14 | 996 | 101 | 9.86 | O | O | 178 |
| Embodiment 15 | 1002 | 116 | 8.64 | O | O | 165 |
| Embodiment 16 | 3015 | 628 | 4.80 | O | O | 203 |
| Embodiment 17 | 1008 | 133 | 7.58 | O | O | 133 |

**Table 3-2**

| | Antioxidant (ppm) | Total fluorine concentration (ppm) | Antioxidant /Fluorine | Gel particles | Heat resistance | Heat resistance time (hours) (at 150°C) |
|---|---|---|---|---|---|---|
| Comparative example 1 | NA | NA | - | O | X | 45 |
| Comparative example 2 | NA | NA | - | O | X | 72 |
| Comparative example 3 | 320 | NA | - | X | O | 98 |
| Comparative example 4 | 3169 | 20 | 158 | X | O | 166 |
| Comparative example 5 | 2988 | 12 | 249 | X | O | 178 |
| Comparative example 6 | 356 | NA | - | Y | O | 144 |
| Comparative example 7 | 311 | 756 | 0.41 | x | O | 151 |
| Comparative example 8 | 98 | 1235 | 0.08 | X | X | 53 |
| Comparative example 9 | 104 | 1116 | 0.09 | X | X | 55 |
| Comparative example 10 | 112 | 1178 | 0.1 | X | X | 48 |
| Comparative example 11 | 96 | 1085 | 0.09 | X | X | 98 |
| Comparative example 12 | 105 | 1133 | 0.09 | x | X | 93 |
| Comparative example 13 | 113 | 1056 | 0.11 | X | x | 82 |
| Comparative example 14 | 1585 | 19 | 83 | X | O | 198 |
| Comparative example 15 | NA | 76 | - | X | Y | 80 |

By comparing the foregoing analysis results, it can be known that when the antioxidant content/fluorine content ratio of an EVOH composition was 0.5 to 65 (as in the cases of embodiments 1 to 17), the resulting film not only had desirable heat resistance, but also did not have a large number of gel particles that were generated during the preparation process. By contrast, comparative examples 1 and 2, in which no antioxidant or fluorine-containing polymer was added, had undesirable heat resistance; the films of comparative examples 3 and 6, in which only an antioxidant was added, were satisfactory only in terms of heat resistance but not in terms of gel particles; the film of comparative example 15, in which only a fluorine-containing polymer was added, was unsatisfactory in terms of both heat resistance and gel particles; and the remaining comparative examples, in which both an antioxidant and a fluorine-containing polymer were added but the antioxidant content/fluorine content ratios were not within the range from 0.5 to 65, failed to show desirable heat resistance and freedom from a large number of gel particles at the same time.

In view of the above, the present invention controls the ratio between the antioxidant content and the fluorine content of an EVOH composition so that the EVOH composition and films containing the same not only have outstanding heat resistance, but also are kept from generating a large number of gel particles during their respective preparation processes.

While a detailed description of the present invention has been given above, it should be understood that the foregoing embodiments are only some preferred ones of the invention and are not intended to be restrictive of the scope of the invention. Any equivalent change or modification that is based on the appended claims shall fall within the scope of the invention.

## Claims

1. An ethylene-vinyl alcohol copolymer (EVOH) composition, comprising an ethylene-vinyl alcohol copolymer, an antioxidant, and a fluorine-containing compound, wherein the weight ratio of the antioxidant content of the ethylene-vinyl alcohol copolymer composition to the fluorine content of the ethylene-vinyl alcohol copolymer composition ranges from 0.5 to 65;
wherein the antioxidant content and the fluorine content are determined by the methods as set out in the description.

2. The ethylene-vinyl alcohol copolymer composition of claim 1, wherein the antioxidant content ranges from 250 ppm to 3200 ppm.

3. The ethylene-vinyl alcohol copolymer composition of claim 1 or 2, wherein the antioxidant is selected from the group consisting of a hindered-phenol-based antioxidant, a hindered-amine-based antioxidant, a phosphorous-ester-based antioxidant, a thioester-based antioxidant, a benzotriazole-based antioxidant, and a benzophenone-based antioxidant.

4. The ethylene-vinyl alcohol copolymer composition of any one of claims 1 to 3, wherein the ethylene-vinyl alcohol copolymer composition has a fluorine content ranging from 40 ppm to 700 ppm.

5. The ethylene-vinyl alcohol copolymer composition of any one of claims 1 to 4, wherein the fluorine-containing compound is derived from a compound of any one, or a combination of thereof, selected from the group consisting of vinylidene fluoride (VDF), hexafluoropropylene (HFP), and tetrafluoroethylene (TFE).

6. The ethylene-vinyl alcohol copolymer composition of any one of claims 1 to 5, wherein the ethylene-vinyl alcohol copolymer composition has a boron content ranging from 10 ppm to 450 ppm.

7. The ethylene-vinyl alcohol copolymer composition of any one of claims 1 to 6, wherein the ethylene-vinyl alcohol copolymer composition has an alkali metal content ranging from 10 ppm to 450 ppm.

8. The ethylene-vinyl alcohol copolymer composition of any one of claims 1 to 7, wherein the fluorine-containing compound is in a form of particles, and the particles are not larger than 20 µm in size, wherein the particle size refers to either the diameter or the major-axis length of a cross section, and the major axis is defined as the axis of the greatest length.

9. A monolayer film containing the ethylene-vinyl alcohol copolymer composition of any one of claims 1 to 8, wherein there are less than 200 gel particles of particle sizes not greater than 100 µm per square meter of the monolayer film, wherein the number of gel particles is analyzed by the methods as set out in the description.

10. The monolayer film of claim 9, wherein the ethylene-vinyl alcohol copolymer composition has an ethylene content ranging from 20 mole% to 35 mole% and has a heat resistance time equal to or longer than 110 hours at 150°C, wherein the heat resistance time is determined by the methods as set out in the description.

11. The monolayer film of claim 9 or 10, wherein the ethylene-vinyl alcohol copolymer composition has an ethylene content ranging from 36 mole% to 50 mole% and has a heat resistance time equal to or longer than 80 hours at 150°C, wherein the heat resistance time is determined by the methods as set out in the descriptio.

12. A multilayer structure, comprising:
at least one layer formed of the ethylene-vinyl alcohol copolymer composition any one of claims 1 to 8;
at least one polymer layer; and
at least one adhesive layer.

13. The multilayer structure of claim 12, wherein the polymer layer is selected from the group consisting of a polyethylene layer, a polyethylene-grafted maleic anhydride layer, a polypropylene layer, a nylon layer, and a combination thereof.

## Patentansprüche

1. Ethylen-Vinylalkohol-Copolymer (EVOH)- Zusammensetzung, umfassend ein Ethylen-Vinylalkohol-Copolymer, ein Antioxidans und eine fluorhaltige Verbindung, wobei das Gewichtsverhältnis des Antioxidansgehalts der Ethylen-Vinylalkohol-Copolymer- Zusammensetzung zum Fluorgehalt der Ethylen-Vinylalkohol-Copolymer-Zusammensetzung im Bereich von 0,5 bis 65 liegt;
wobei der Gehalt an Antioxidantien und der Fluorgehalt nach den in der Beschreibung angegebenen Methoden bestimmt werden.

2. Ethylen-Vinylalkohol-Copolymer-Zusammensetzung nach Anspruch 1, wobei der Gehalt an Antioxidationsmitteln im Bereich von 250 ppm bis 3200 ppm liegt.

3. Ethylen-Vinylalkohol-Copolymer- Zusammensetzung nach Anspruch 1 oder 2, wobei das Antioxidans aus der Gruppe ausgewählt ist, die aus einem Antioxidans auf Basis von gehindertem Phenol, einem Antioxidans auf Basis von gehindertem Amin, einem Antioxidans auf Basis von Phosphorester, einem Antioxidans auf Basis von Thioester, einem Antioxidans auf Basis von Benzotriazol und einem Antioxidans auf Basis von Benzophenon besteht.

4. Ethylen-Vinylalkohol-Copolymer-Zusammensetzung nach einem der Ansprüche 1 bis 3, wobei die Ethylen-Vinylalkohol-Copolymer-Zusammensetzung einen Fluorgehalt im Bereich von 40 ppm bis 700 ppm aufweist.

5. Ethylen-Vinylalkohol-Copolymer-Zusammensetzung nach einem der Ansprüche 1 bis 4, , wobei die fluorhaltige Verbindung von einer beliebigen Verbindung oder einer Kombination davon abgeleitet ist, ausgewählt aus der Gruppe bestehend aus Vinylidenfluorid (VDF), Hexafluorpropylen (HFP) und Tetrafluorethylen (TFE).

6. Ethylen-Vinylalkohol-Copolymer-Zusammensetzung nach einem der Ansprüche 1 bis 5, wobei die Ethylen-Vinylalkohol-Copolymer-Zusammensetzung einen Borgehalt im Bereich von 10 ppm bis 450 ppm aufweist.

7. Ethylen-Vinylalkohol-Copolymer-Zusammensetzung nach einem der Ansprüche 1 bis 6, wobei die Ethylen-Vinylalkohol-Copolymer-Zusammensetzung einen Alkalimetallgehalt im Bereich von 10 ppm bis 450 ppm aufweist.

8. Ethylen-Vinylalkohol-Copolymer-Zusammensetzung nach einem der Ansprüche 1 bis 7, wobei die fluorhaltige Verbindung in Form von Teilchen vorliegt und die Teilchen eine Größe von nicht mehr als 20 *µ* m aufweisen, wobei sich die Teilchengröße entweder auf den Durchmesser oder die Hauptachsenlänge eines Querschnitts bezieht und die Hauptachse als die Achse mit der größten Länge definiert ist.

9. Einschichtige Folie, die die Ethylen-Vinylalkohol-Copolymer-Zusammensetzung nach einem der Ansprüche 1 bis 8 enthält, wobei weniger als 200 Gelteilchen mit einer Teilchengröße von nicht mehr als 100 µm pro Quadratmeter der einschichtigen Folie vorhanden sind, wobei die Anzahl der Gelteilchen durch die in der Beschreibung dargelegten Verfahren analysiert wird.

10. Einschichtige Folie nach Anspruch 9, wobei die Ethylen-Vinylalkohol-Copolymer-Zusammensetzung einen Ethylengehalt im Bereich von 20 Mol-% bis 35 Mol-% aufweist und eine Wärmebeständigkeitszeit gleich oder länger als 110 Stunden bei 150° C hat, wobei die Wärmebeständigkeitszeit durch die in der Beschreibung dargelegten Verfahren bestimmt wird.

11. Einschichtige Folie nach Anspruch 9 oder 10, wobei die Ethylen-Vinylalkohol-Copolymer-Zusammensetzung einen Ethylengehalt im Bereich von 36 Mol-% bis 50 Mol-% aufweist und eine Wärmebeständigkeitszeit gleich oder länger als 80 Stunden bei 150° C hat, wobei die Wärmebeständigkeitszeit durch die in der Beschreibung dargelegten Verfahren bestimmt wird.

12. Mehrschichtige Struktur, umfassend:
mindestens eine Schicht, die aus der Ethylen-Vinylalkohol-Copolymer-Zusammensetzung nach einem der Ansprüche 1 bis 8 besteht;
mindestens eine Polymer-Schicht; und
mindestens eine Klebe-Schicht.

13. Mehrschichtige Struktur nach Anspruch 12, wobei die Polymer-Schicht ausgewählt ist aus der Gruppe bestehend aus einer Polyethylen-Schicht, einer mit Polyethylen gepfropften Maleinsäureanhydrid-Schicht, einer Polypropylen-Schicht, einer Nylon-Schicht und einer Kombination davon.

## Revendications

1. Composition de copolymère d'éthylène-alcool vinylique (EVOH) comprenant un copolymère d'éthylène-alcool vinylique, un antioxydant et un composé contenant du fluor, dans laquelle le rapport en poids de la teneur en antioxydant de la composition de copolymère d'éthylène-alcool vinylique à la teneur en fluor de la composition de copolymère d'éthylène-alcool vinylique se situe dans la plage de 0,5 à 65 ;
la teneur en antioxydants et la teneur en fluor étant déterminées selon les méthodes indiquées dans la description.

2. Composition de copolymère éthylène-alcool vinylique selon la revendication 1, dans laquelle la teneur en antioxydants se situe dans la plage de 250 ppm à 3200 ppm.

3. Composition de copolymère éthylène-alcool vinylique selon la revendication 1 ou 2, dans laquelle l'antioxydant est choisi dans le groupe constitué par un antioxydant à base de phénol encombré, un antioxydant à base d'amine encombrée, un antioxydant à base d'ester phosphorique, un antioxydant à base de thioester, un antioxydant à base de benzotriazole et un antioxydant à base de benzophénone.

4. Composition de copolymère d'éthylène et d'alcool vinylique selon l'une quelconque des revendications 1 à 3, dans laquelle la composition de copolymère d'éthylène et d'alcool vinylique a une teneur en fluor dans la plage de 40 ppm à 700 ppm.

5. Composition de copolymère éthylène-alcool vinylique selon l'une quelconque des revendications 1 à 4, , dans laquelle le composé contenant du fluor est dérivé de n'importe quel composé ou combinaison de composés choisis dans le groupe constitué par le fluorure de vinylidène (VDF), l'hexafluoropropylène (HFP) et le tétrafluoroéthylène (TFE).

6. Composition de copolymère d'éthylène et d'alcool vinylique selon l'une quelconque des revendications 1 à 5, dans laquelle la composition de copolymère d'éthylène et d'alcool vinylique a une teneur en bore dans la plage de 10 ppm à 450 ppm.

7. Composition de copolymère d'éthylène et d'alcool vinylique selon l'une quelconque des revendications 1 à 6, dans laquelle la composition de copolymère d'éthylène et d'alcool vinylique a une teneur en métal alcalin dans la plage de 10 ppm à 450 ppm.

8. Composition de copolymère d'éthylène et d'alcool vinylique selon l'une quelconque des revendications 1 à 7, dans laquelle le composé contenant du fluor est sous forme de particules et les particules ont une taille ne dépassant pas 20 µm, la taille des particules se rapportant soit au diamètre, soit à la longueur du grand axe d'une section transversale, le grand axe étant défini comme l'axe ayant la plus grande longueur.

9. Film monocouche contenant la composition de copolymère d'éthylène et d'alcool vinylique selon l'une quelconque des revendications 1 à 8, dans lequel moins de 200 particules de gel ayant une taille de particule ne dépassant pas 100 µm par mètre carré du film monocouche sont présentes, le nombre de particules de gel étant analysé par les méthodes exposées dans la description.

10. Film monocouche selon la revendication 9, dans lequel la composition de copolymère d'éthylène-alcool vinylique a une teneur en éthylène dans la plage de 20 % en moles à 35 % en moles et a une durée de résistance à la chaleur égale ou supérieure à 110 heures à 150° C, la durée de résistance à la chaleur étant déterminée par les procédés exposés dans la description.

11. Film monocouche selon la revendication 9 ou 10, dans lequel la composition de copolymère d'éthylène-alcool vinylique a une teneur en éthylène dans la plage de 36 % en moles à 50 % en moles et a une durée de résistance à la chaleur égale ou supérieure à 80 heures à 150° C, la durée de résistance à la chaleur étant déterminée par les procédés exposés dans la description.

12. Structure multicouche, comprenant
au moins une couche constituée de la composition de copolymère d'éthylène et d'alcool vinylique selon l'une quelconque des revendications 1 à 8 ;
au moins s une couche de polymère ; et
au moins une couche de colle.

13. Structure multicouche selon la revendication 12, dans laquelle la couche de polymère est choisie dans le groupe constitué par une couche de polyéthylène, une couche d'anhydride maléique greffée avec du polyéthylène, une couche de polypropylène, une couche de nylon et une combinaison de celles-ci.
